**Europäisches Patentamt**

**European Patent Office**

**Office européen des brevets**

(19)

(11) Veröffentlichungsnummer : **0 151 292**
**B1**

# EUROPÄISCHE PATENTSCHRIFT

(12)

(45) Veröffentlichungstag der Patentschrift :
29.07.87

(21) Anmeldenummer : 84115716.7

(22) Anmeldetag : 18.12.84

(51) Int. Cl.⁴ : **C 08 G 59/06**, C 08 G 59/08

(54) Verfahren zur Herstellung von Epoxidharzen.

(30) Priorität : 24.01.84 DE 3402247

(43) Veröffentlichungstag der Anmeldung :
14.08.85 Patentblatt 85/33

(45) Bekanntmachung des Hinweises auf die Patenterteilung : 29.07.87 Patentblatt 87/31

(84) Benannte Vertragsstaaten :
CH DE FR GB IT LI NL

(56) Entgegenhaltungen :
EP-A- 0 022 073
EP-A- 0 031 435
FR-A- 2 394 567
CHEMICAL ABSTRACTS, Band 85, Nr. 8, 23. August
1976, Seite 36, Nr. 47555e, Columbus, Ohio, US
POLYMER BULLETIN, Band 8, Nr. 11/12, Dezember
1982, Seiten 571-578, Heidelberg, DE; J.P. KENNEDY
u.a.: "New telechelic polymers and sequential copolymers by polyfunctional initiator-transfer agents
(Inifers)"

(73) Patentinhaber : BASF Aktiengesellschaft
Carl-Bosch-Strasse 38
D-6700 Ludwigshafen (DE)

(72) Erfinder : Czauderna, Bernhard, Dr.
Kapellenweg 34
6945 Hirschberg (DE)
Erfinder : Nieberle, Jürgen, Dr.
Am Huettenwingert 19
D-6706 Wachenheim (DE)

## Beschreibung

Die Erfindung betrifft ein Verfahren zur Herstellung von Epoxidharzen durch Umsetzung eines mehrwertigen Phenols mit Epichlorhydrin in Gegenwart von Alkali.

Polyphenylolglycidyether werden in einer Reaktionsfolge aus Addition und Eliminierung bei der Umsetzung von mehrwertigen Phenolen mit Epichlorhydrin in Gegenwart von Alkali gebildet. Üblicherweise wird die Reaktion so durchgeführt, daß zu einem Gemisch aus dem Phenol und Epichlorhydrin, gegebenenfalls in Gegenwart von Lösungsmitteln, bei erhöhter Temperatur (80 bis 120 °C) Natronlauge, eventuell bei gleichzeitiger Wasserauskreisung, zudosiert wird.

Unter diesen Reaktionsbedingungen laufen die Nebenreaktionen, wie

nucleophile Substitution des Chlors durch Phenol
Polymerisation des Epichlorhydrins
Reaktion des Phenols mit Glycidyether
Hydrolyse des Glycidyethers
Bildung von 1,3-Chlorhydrinen

in einem erheblichen Umfang ab. Aber auch die mitunter empfohlene zeitliche Trennung von Addition und Eliminierung (2-Stufenverfahren) führt nicht zu einer deutlichen Verringerung der Nebenproduktbildung. Diese Nebenprodukte machen sich bezüglich Umfang und Abtrennungsproblematik um so störender bemerkbar, je höhermolekularer das eingesetzte mehrwertige Phenol ist, vor allem aber, wenn Novolake eingesetzt werden.

In der EP-A-31 435 ist ein derartiges Zweistufenverfahren beschrieben, bei dem in der ersten Stufe bei 100 °C ein mehrwertiges Phenol an Epichlorhydrin addiert, und in der zweiten Stufe die Dehydrohalogenierung in Gegenwart von Oniumverbindungen bei 40-60 °C durchgeführt wird.

Der Erfindung lag also die Aufgabe zugrunde, bei der Umsetzung von mehrwertigen Phenolen mit Epichlorhydrin in Gegenwart von Alkali die Bildung von Nebenprodukten weitgehend zu unterdrücken und mit hohen Ausbeuten möglichst gering verfärbte Epoxidharze bei niedrigen Temperaturen herzustellen.

Es wurde gefunden, daß diese Aufgabe gelöst wird, wenn man Alkalisalze von bestimmten mehrwertigen Phenolen als wäßrige Lösung mit mindestens stöchiometrischen Mengen Epichlorhydrin in Gegenwart von 1-37 Mol.-%, bezogen auf das mehrwertige Phenol, eines Phasentransferkatalysators bei Temperaturen zwischen 0 bis 25 °C umsetzt.

Unter den erfindungsgemäßen Reaktionsbedingungen läuft die üblicherweise als Nebenreaktion ablaufende nucleophile Substitution als Hauptreaktion ab.

Die Vorteile des erfindungsgemäßen Verfahrens sind :

niedrige Temperatur
hohe Ausbeuten
kein Molekulargewichtsaufbau
keine Farbvertiefung gegenüber dem Ausgangsmaterial.

Mehrwertige Phenole im Sinne der Erfindung sind 2,2'-Bis-(4-hydroxyphenyl)propan, 4,4'-Dihydroxydiphenylsulfon sowie vorzugsweise Novolake auf Basis Phenol oder dessen substituierten Derivaten, insbesondere solche mit mittleren Molekulargewichten zwischen 200 und 1 000, gemessen nach der GPC-Methode.

Die mehrwertigen Phenole werden als wäßrige Lösungen in Form ihrer Alkalisalze eingesetzt. Zu deren Herstellung löst man die mehrwertigen Phenole in wäßrigem Alkali, vorzugsweise in 10 bis 80 gew.-%igen Lösungen von Natrium- oder Kaliumhydroxid in Wasser, wobei mindestens stöchiometrische Mengen Alkali eingesetzt werden, vorzugsweise ein 1,5 bis 5facher Überschuß angewandt wird.

Das Epichlorhydrin wird in mindestens stöchiometrischer Menge, bezogen auf das mehrwertige Phenol, eingesetzt. Besonders gute Ergebnisse werden bei 2 bis 10fachem, insbesondere bei 5 bis 8fachem Überschuß erzielt.

Die Reaktion läuft in einem zweiphasigen Medium ab. Die organische Phase kann neben Epichlorhydrin noch organische, nicht mit Wasser mischbare Lösungsmittel, wie Kohlenwasserstoffe und Halogenkohlenwasserstoffe, vorzugsweise Methylenchlorid oder Chloroform, in Mengen von 0 bis 50 Gew.-%, bezogen auf das Epichlorhydrin, enthalten.

Wesentlich ist die Anwesenheit eines Phasentransferkatalysators. Bevorzugte Katalysatoren sind Aryl-, Alkyl- und Cycloalkylammoniumhalogenide, insbesondere solche mit 1 bis 20 Kohlenstoffatomen in Alkyl-, Aryl- oder Cycloalkylrest. Bevorzugte Halogene sind Chlor und Brom. Außer den Halogeniden kommen auch Hydrogensulfate, Hexafluorantimonate, -arsenate und -phosphate, Tetrafluoroborate, Nitrate, Nitrite, Perchlorate, Toluolsulfonate, Trifluormethansulfonate, Cyanate, Thiocyanate und Cyanide in Frage. Neben den Ammoniumsalzen können auch Phosphonium- und Arsoniumsalze eingesetzt werden. Besonders geeignet sind Benzyltriethyl- und Benzyltrimethylammoniumchlorid. Die Phasentransferkatalysatoren werden vorzugsweise in Mengen von 1 bis 30 Mol.-%, bezogen auf das mehrwertige Phenol, eingesetzt.

Die Reaktion wird bei Temperaturen zwischen 0 bis 25 °C, vorzugsweise zwischen 15 und 25 °C, durchgeführt. Sie dauert im allgemeinen 2 bis 48, vorzugsweise 6 bis 16 Stunden.

Aus den erfindungsgemäß hergestellten Epoxidharzen kann man mit Hilfe von Härtern oder Katalysatoren Kunststoffteile herstellen, man kann sie auch mit (Meth-)Acrylsäure zu Vinylesterharzen umsetzen, aus denen ebenfalls Kunststoffteile hergestellt werden können.

Die in den Beispielen genannten Prozente beziehen sich auf das Gewicht.

Beispiel 1 (Vergleichsbeispiel)

Ein Gemisch aus 500 g eines Novolaks mit einem mittleren Molgewicht von 420 und 2 500 g Epichlorhydrin wird auf 110 bis 115 °C erwärmt. Zu diesem Gemisch werden unter kräftigem Rühren und gleichzeitiger Wasserauskreisung während 5 Stunden 400 g 50 %ige Natronlauge zugefahren. Anschließend wird das Epichlorhydrin im Vakuum abdestilliert und der Rückstand mit Diethylketon aufgenommen sowie mit Wasser gewaschen. Nach der Destillation des Lösungsmittels bleiben als Rückstand 360 g eines dunkelbraunen Epoxidharzes.

Epoxidäquivalent : 192
Viskosität bei 100 °C : 1 090 m.Pas.

Beispiel 2

500 g Novolak mit einem mittleren Molekulargewicht von 420 (5 Mol OH-Gruppen) werden in 800 g einer 50 %igen Natronlauge (10 Mol NaOH) gelöst. Unter kräftigem Rühren werden dazu bei Raumtemperatur zuerst 100 g Benzyltriethylammoniumchlorid (0,44 Mol) zugegeben und dann innerhalb von 2 Stunden 3 500 g Epichlorhydrin (38 Mol). Anschließend wird das Gemisch 8 h bei 20 bis 25 °C gerührt. Dann wird die wäßrige Phase abgetrennt und das Epichlorhydrin der organischen Phase im Vakuum abdestilliert. Als Rückstand bleiben 690 g eines hellgelben Epoxidharzes.

Epoxidäquivalent : 166
Viskosität bei 100 °C : 540 m.Pas.

Beispiel 3

Es wird wie in Beispiel 2 gearbeitet, jedoch mit 500 g Bisphenol A (2,2 Mol) anstelle des Novolaks. Es werden 700 g eines hellgelben Bisphenol A-Diglycidylethers erhalten.

Epoxidäquivalent : 170
Viskosität bei 50 °C : 300 m.Pas.

Patentansprüche

1. Verfahren zur Herstellung von Epoxidharzen durch Umsetzung von mehrwertigen Phenolen, ausgewählt aus 2,2'-Bis-(4-hydroxyphenyl)propan, 4,4'-Dihydroxydiphenylsulfon und Novolaken auf Basis Phenol oder dessen substituierten Derivaten, mit mindestens stöchiometrischen Mengen Epichlorhydrin, gegebenenfalls zusammen mit 0 bis 50 Gew.-% organischen, nicht mit Wasser mischbaren Lösungsmitteln, in Gegenwart von Alkali und von 1-37 Mol.-%, bezogen auf das mehrwertige Phenol, eines Phasentransferkatalysators, dadurch gekennzeichnet, daß Alkalisalze der mehrwertigen Phenole als wäßrige Lösung mit Epichlorhydrin bei Temperaturen zwischen 0 und 25 °C umgesetzt werden.

2. Verfahren zur Herstellung von Epoxidharzen nach Anspruch 1, dadurch gekennzeichnet, daß der Phasentransferkatalysator ein Alkyl-, Aryl- oder Cycloalkylammoniumhalogenid ist.

Claims

1. A process for the preparation of epoxy resins by reacting polyhydric phenols, selected from 2,2'-bis (4-hydroxyphenyl)propane, 4,4'-dihydroxydiphenylmethane and novolaks based on phenol or its substituted derivatives, with at least a stoichiometric amount of epichlorohydrin in the presence of alkali and of from 1 to 37 mole percent, based on the polyhydric phenol, of a phase transfer catalyst, and optionally in the presence of up to 50 % by weight of organic, water-immiscible solvents, wherein alkali metal salts of the polyhydric phenols in the form of an aqueous solution are reacted with epichlorohydrin at from 0 to 25 °C.

2. A process for the preparation of epoxy resins as claimed in claim 1, wherein the phase transfer catalyst is an alkyl-, aryl- or cycloalkylammonium halide.

Revendications

1. Procédé de préparation de résines époxydes par réaction de phénols plurivalents, choisies parmi 2,2'-bis-(4-hydroxyphényl)propane, 4,4'-dihydroxydiphénylsulfone et Novolaques à base de phénol ou leurs dérivés de substitution, avec des quantités au moins stœchiométriques d'épichlorhydrine, éventuellement avec 0 à 50 % en poids de solvants organiques, non miscibles avec l'eau, en présence d'alcali et de 1 à 37 % (moles), rapporté au phénol plurivalent, d'un catalyseur de transfert de phases, caractérisé par le fait qu'on fait réagir des sels alcalins des phénols plurivalents, sous forme de solution aqueuse, avec de l'épichlorhydrine, à des températures comprises entre 0 et 25 °C.

2. Procédé de préparation de résines époxydes selon la revendication 1, caractérisé par le fait que le catalyseur de transfert de phases est un halogénure d'alkyl-, aryl- ou cycloalkylammonium.